Europäisches Patentamt

European Patent Office

Office européen des brevets

(19)

(11) Veröffentlichungsnummer: **0 206 039**
**A1**

## EUROPÄISCHE PATENTANMELDUNG

(21) Anmeldenummer: **86107670.1**

(51) Int. Cl.⁴: **B 23 D 33/12**

(22) Anmeldetag: **05.06.86**

(30) Priorität: **13.06.85 DE 3521197**

(43) Veröffentlichungstag der Anmeldung: **30.12.86**
**Patentblatt 86/52**

(84) Benannte Vertragsstaaten: **CH FR GB IT LI**

(71) Anmelder: **BÖWE Informations- und Systemtechnic GmbH, Haunstetter Strasse 112, D-8900 Augsburg (DE)**

(72) Erfinder: **Wanner, Rudolf, Langenmantelstrasse 8, D-8901 Aystetten (DE)**

(54) **Messerführung bei einer Schneidemaschine.**

(57) Die Erfindung betrifft eine Messerführung bei einer Schneidemaschine für Endlosformulare, in der ein Obermesser (4) gegenüber einem darunter befindlichen, feststehenden Untermesser (1) beweglich geführt ist.

Um die Einstellung und Kontrolle der Schnittlage zu ermöglichen, ist in der Führung (3) eine Ausnehmung (7) vorgesehen, die einen von oben nach unten, auf die Schneidkante (6) des Untermessers (1) gerichteten Sichtkanal bildet.

EP 0 206 039 A1

0206039

Messerführung bei einer Schneidemaschine

Die Erfindung betrifft eine Messerführung bei einer Schneidemaschine für Endlosformulare, in der ein Obermesser gegenüber einem darunter befindlichen, fest stehenden Untermesser beweglich geführt ist.

In Schneidemaschinen , die mit höherer Geschwindigkeit arbeiten, ist das bewegliche und daher dünn und massearm ausgebildete Messer, meist das Obermesser, in einer Messerführung, die in der Regel aus zwei feststehenden Teilen besteht, oberhalb des feststehenden Untermessers angeordnet. Diese Messerführungen haben aus Festigkeitsgründen und zusätzlich auch aus Unfallschutzgründen eine gewisse Dicke und räumliche Ausdehnung. Dadurch ist eine direkte Sicht an die Messerkante nicht mehr oder nur sehr schwer möglich.

Wenn nun die zu schneidenden Papierbahnen und vor Beginn des Schneidvorganges unter dem Messer genau auf eine Sollschnittlinie eingestellt werden müssen, so daß ein Schnitt genau in der Perforierung bzw. in der für den Trennschnitt vorgesehenen Linie erfolgt, so ist die Kontrolle und die Einstellung der Schnittlage aus den vorerwähnten Gründen mit großen Schwierigkeiten verbunden.

Es ist daher Aufgabe der Erfindung, eine einfache und billige Ausgestaltung der Messerführung zu schaffen, durch die eine einfache, rasche und zuverlässige  Einstellung und Kontrolle der Schnittlage jederzeit erreicht wird.

Die erfindungsgemäße Lösung dieser Aufgabe besteht darin, daß in der Führung eine Ausnehmung vorgesehen ist, die einen von oben nach unten, auf die Schneidkante des Untermessers gerichteten Sichtkanal bildet. Durch eine solche Ausnehmung in der Messerführung, die vorzugsweise eine etwa rohrartige Form aufweist, erhält man eine bequeme Einblicköffnung durch die die Messerkante beobachtet werden kann.

In bevorzugter Ausführungsform besitzt die Ausnehmung im einfachsten Fall einen kreisförmigen Querschnitt. Sie kann, im Längsschnitt gesehen, eine von oben nach unten konisch verlaufende Form aufweisen.

Zur besseren  Beobachtung kann erfindungsgemäß eine den Bereich der Schneidkante des Untermessers beleuchtende Lichtquelle vorgesehen sein. Diese Lichtquelle wird vorzugsweise unter einem solchen Winkel angeordnet, daß keine Reflektion des unteren Messers in die die Einblicköffnung bildende Ausnehmung erfolgt. Im Rahmen der Erfindung kann die Ausnehmung auch mit einem nicht reflektierenden Belag ausgekleidet sein.

Ist die mit der erfindungsgemäßen Messerführung ausgestattete Schneidemaschine ohne Papier, erscheint dadurch die Fläche des Untermessers in der Einblicköffnung dunkel. Die Kante des Untermessers ist somit sehr ausgeprägt, etwa in der Mitte der Einblicköffnung, zu erkennen. Wird nun das Papier bis zur Messerkante eingeführt, so ist aufgrund des beleuchteten Farbunterschiedes sehr genau zu erkennen, wann die Papierkante  oder die Perforation, längs welcher der Schnitt erfolgen soll, die eigentliche Schneidkante erreicht hat.

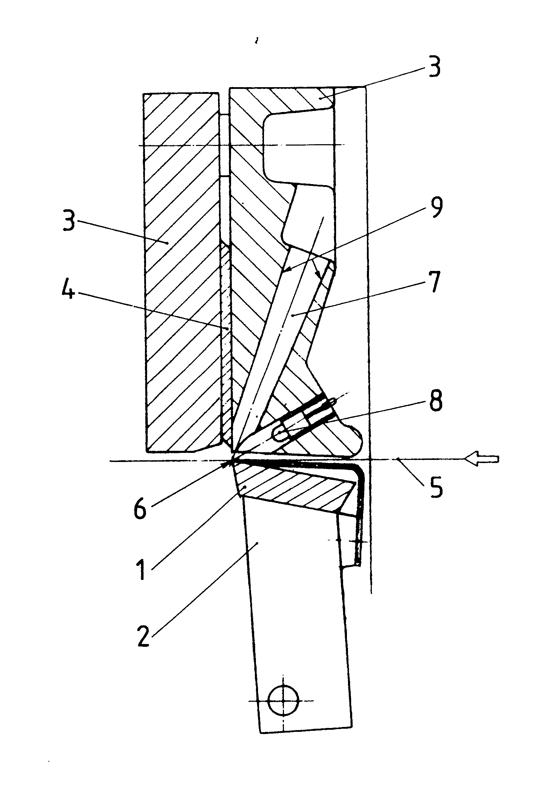

In der Zeichnung ist eine Messerführung gemäß der Erfindung beispielsweise und schematisch dargestellt. Über dem Untermesser 1, das auf einem Messerträger 2 befestigt ist, ist in einer zweiteiligen Führung 3 beweglich geführt das Obermesser 4 in bekannter Weise angeordnet. Die Papierbahn 5 wird, wie üblich, zwischen dem Untermesser 1 und dem Obermesser 4 gemäß Pfeilrichtung hindurchgeführt.

Erfindungsgemäß ist in der Führung 3 eine von oben nach unten, auf die Schneidkante 6 des Untermessers 1 gerichtete Ausnehmung 7 vorgesehen, die einen Sichtkanal zum bequemen Beobachten der Schneidkante 6 und der darauf liegenden, zum Zweck der Schnittlageneinstellung und -kontrolle entsprechend hin und herschiebbaren Papierbahn 5 bildet. Die etwa rohrförmige Ausnehmung 7 hat einen leicht konischen Verlauf. Der Winkel der Längsachse gegenüber der Vertikalen ist so gewählt, daß er dem Bediener eine Einblicköffnung bei bequemer Körperhaltung ermöglicht.

In einem weiteren Kanal, der in den durch die Ausnehmung 7 gebildeten Sichtkanal einmündet, ist eine Lichtquelle in Form einer kleinen Lampe 8 unter einem solchen Winkel angeordnet, daß keine Reflektion des Untermesser 1 in die durch die Ausnehmung 7 gebildete Einblicköffnung entsteht. Zusätzlich ist die Innenfläche der Ausnehmung 7 mit einem nicht reflektierenden Belag 9 ausgekleidet.

Vor Beginn des eigentlichen Schneidvorganges wird die Papierbahn 5 so eingestellt, daß ihre Vorderkante, die die Schnittkante bildet, mit der Schneidkante 6 des Untermessers zur Deckung kommt, was durch die Ausnehmung 7 leicht beobachtet werden kann.

0206039

## Patentansprüche

1. Messerführung bei einer Schneidemaschine für Endlosformulare, in der ein Obermesser (4) gegenüber einem darunter befindlichen, fest stehenden Untermesser (1) in einer Führung (3) beweglich geführt ist, d a - d u r c h   g e k e n n z e i c h n e t , daß in der Führung (3) eine Ausnehmung (7) vorgesehen ist, die einen von oben nach unten, auf die Schneidkante (6) des Untermessers (1) gerichteten Sichtkanal bildet.

2. Messerführung nach Anspruch 1, d a d u r c h   g e k e n n z e i c h - n e t , daß die Ausnehmung (7) eine ungefähr rohrartige Form aufweist.

3. Messerführung nach Anspruch 2, d a d u r c h   g e k e n n z e i c h - n e t , daß die Ausnehmung (7) einen ungefähr kreisförmigen Querschnitt besitzt.

4. Messerführung nach Anspruch 2 oder 3, d a d u r c h   g e k e n n - z e i c h n e t, daß die Ausnehmung (7) die Form eines ungefähr konisch zulaufenden Rohres aufweist.

5. Messerführung nach Anspruch 1 oder folgenden, d a d u r c h   g e - k e n n z e i c h n e t , daß eine den Berich der Schneidkante (6) des Untermessers (1) beleuchtende Lichtquelle (8) vorgesehen ist.

6. Messerführung nach Anspruch 5, d a d u r c h   g e k e n n z e i c h - n e t , daß die Lichtquelle (8) unter einem eine Reflektion des Untermessers (1) in die Ausnehmung (7) vermeidenden Winkel angeordnet ist.

7. Messerführung nach Anspruch 5 oder 6, d a d u r c h   g e k e n n - z e i c h n e t , daß die Innenfläche der Ausnehmung (7) mit einem nicht reflektierenden Belag (9) ausgekleidet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 511 762 (MASCHINENFABRIK WEINGARTEN) * Insgesamt * | 1,3,5 | B 23 D 33/12 |
| A | DE-A-2 005 137 (VON ARX) | | |
| A | FR-A-1 418 235 (OSWALD) | | |
| A | DE-C- 477 564 (L. SCHULER AG) | | |
| A | DE-C- 459 241 (MASCHINENFABRIK WEINGARTEN) | | |

RECHERCHIERTE SACHGEBIETE (Int. Cl.4)

B 23 D
B 26 D

Der vorliegende Recherchenbericht wurde für alle Patentansprüche erstellt.

| Recherchenort | Abschlußdatum der Recherche | Prüfer |
|---|---|---|
| DEN HAAG | 16-09-1986 | BERGHMANS H.F. |